(19) Europäisches Patentamt
European Patent Office
Office européen des brevets

(11) **EP 2 712 100 A1**

(12) **EUROPEAN PATENT APPLICATION**

(43) Date of publication:
**26.03.2014  Bulletin 2014/13**

(51) Int Cl.:
*H04J 3/06* (2006.01)

(21) Application number: **12185082.0**

(22) Date of filing: **19.09.2012**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

</td><td>

(72) Inventors:
• **Le Pallec, Michel**
  **91620 Nozay (FR)**
• **Bui, Dinh Thai**
  **91620 Nozay (FR)**

(74) Representative: **Camus, Olivier Jean-Claude**
  **Cabinet Camus Lebkiri**
  **87, rue Taitbout**
  **75009 Paris (FR)**

</td></tr>
</table>

(54) **METHOD FOR SWITCHING FROM A ONE-WAY INTO A TWO-WAY SIGNALLING MODE AS A PROTECTION SCHEME FOR THE DISTRIBUTION OF TIME AND FREQUENCY OVER A PACKET SWITCHED NETWORK**

(57)    The method for managing an accurate distribution of time in a packet network, the packet network comprising a peer-to-peer transparent clock hardware support in at least one network elements (NE), the transparent clock hardware support enabling a local delay measurement mechanism between two adjacent transparent clocks, a Master (106) /Slave (108) end-to-end synchronization path (112) comprising a first set of network elements ($104_1$, $104_2$, $104_3$) and their associated transparent clocks ($102_1$, $102_2$, $102_3$), the Master (106) and slave (108) exchanging unidirectional time stamped packets through the first set of network elements, wherein the method comprises :

● generating a first indicator in at least a specific field of a first time stamped packet by a first element (NE1) when a failure occurs which disables the local delay measurement mechanism between the first element and a second element of the first set ;

● starting requesting a two-way signalling mode comprising generating at least a second time stamped packet in order to measure a second delay corresponding to an end-to-end transmission delay (TD2) of the second time stamp packet from the slave (108) to the Master (106).

FIG.5

**Description**

**Technical field**

The invention relates generally to communication systems which involve packet switched network, called PSN and time distribution in such a network. More precisely, the invention relates to a method for managing an accurate distribution of time, especially when a failure occurs within an equipement or on a path of the network impacting the information transfer relating to the distribution of time. In a main aspect, the invention is related to corrective operations of time distribution and delay measurements when a IEEE Standard 1588-2008 peer delay mechanism has failed.

**Background technology**

It is known to implement, within a packet telecommunication network, a specific equipment or device - called thereafter as transparent clock - on a given network node/element (e.g. router or switch) aiming at taking into account this network element residence times - i.e. delays undergone by different synchronization packets to come across such a network element, it is also called as "transit delays".

Transparent clocks are implemented on respective network elements - e.g. routers or switches - along a communication path between a given pair of master and slave clocks or master and slave ports, called thereafter respectively as "Master" and "Slave". They exchange synchronization time-stamped packets aiming at distributing the time reference from the Mater to the Slave along said communication path.

On the basis of conveying time control packets, a transparent clock can, by default, measure and inform the Slave of the associated network element residence times, said transparent clock is called as an end-to-end transparent clock. When a transparent clock is also able to measure neighboring path delays - said measurement method being called as the peer delay mechanism - the transparent clock is called as a peer-to-peer transparent clock.

A given pair of peer-to-peer transparent clocks are said to be "adjacent" if they are peers to each other with regards to the peer delay mechanism. Two such adjacent peer-to-peer transparent clocks can be directly connected via a network physical "link" or can by separated by a network "path" made of successive combinations of network links and network elements. For the rest of this document, the term "path" is also used to designate a link; i.e. a path made of one single link.

As an example of method implementing transparent clocks and time control packets, the standard IEEE 1588V2, also called Precision Time Protocol release 2 version or PTPV2, of the Institute of Electrical and Electronics Engineers (IEEE) can be considered.

In the present description, a transparent clock TC may be, as defined in the IEEE 1588V2 standard : a peer-to-peer transparent clock (P2P TC).

Within the specific case of a full P2P TC deployment - i.e. whereby all the possible intermediate network elements between the Master and the Slave are associated with a P2P TC - the distribution of time (or frequency) is impacted when P2P TC operations fail to guarantee a correctly synchronized frequency and/or time between the Master and the Slave. Thus, corrective and proactive actions are required to deal with P2P TC failures and especially with failures related to the peer delay mechanism.

In the present document, a network architecture with full or partial deployment of P2P TCs is called as a P2P network architecture. Similarly, when a network element is supported by a P2P TC, the term "network element" and the term "peer-to-peer transparent clock" are used interchangeably.

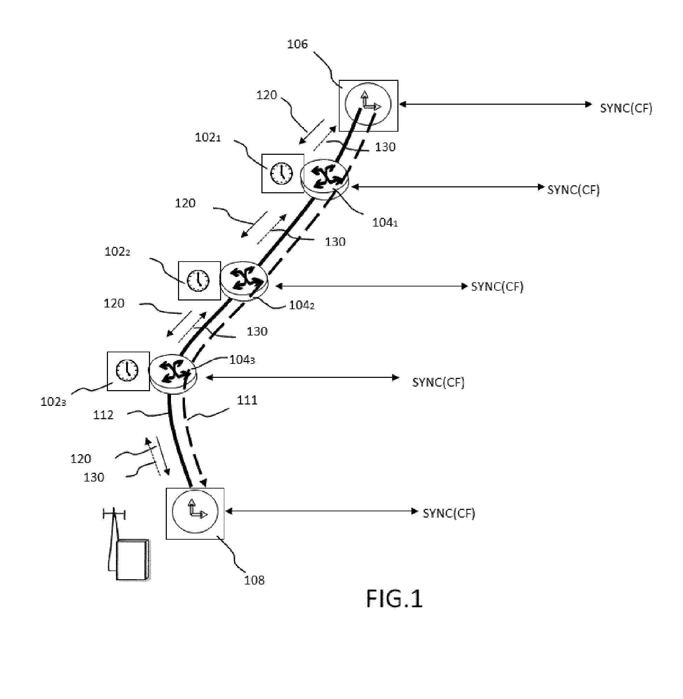

Figure 1 represents a P2P network architecture comprising P2P TCs ensuring path delay measurements on the end-to-end synchronization path between the Master 106 and the Slave 108.

Although depicted with one peer delay instance per considered segment, a given path delay could be measured twice by two peer delay instances, each measurement instance being triggered by one or both adjacent P2P TCs delineating the considered path. But, this targeted redundant operation mode suffers from strong issues especially while considering :

- the objective of these two measurement instances: for a same path, these two measurement instances aim at covering the case when synchronization packets transmission directions change relatively to the rules imposed by the PTPV2 standard;
- that both involved ports have to be capable of generating messages. It means that if a failure occurs at one side, .e.g. one port unable to generate messages then both instances fail.

The messages exchanged within a P2P network architecture comprise different fields aiming at sharing synchronization data and/or time distribution information between the network elements. Such messages can be for instance SYNC messages as defined in the IEEE 1588V2 standard. One field within the messages is particularly used in a P2P network architecture, it is called the "correction field" as defined in the IEEE 1588V2 standard.

The semantics of the correction field of exchanged messages in a P2P network architecture can cumulate up to three values:

- Network element (NE) transit delays (residence time);
- mean path delays and ;
- path delay asymmetries.

When a failure occurs within a given peer delay mechanism of such an architecture, the downstream (with regards to the time distribution direction) P2P TC has to be declared as in a FULL failure state whereas some of its remaining interesting capabilities could still be maintained for supporting the time distribution (e.g. NE residence time measurements).

The figure 1 represents in each NE : $104_1$, $104_2$, $104_3$, an associated peer-to-peer transparent clock (P2P TC) : $102_1$, $102_2$, $102_3$. The peer delay mechanism - providing the measurement of an adjacent path delay information - allows for cumulating into the correction field CF of the SYNC message with said path delay information and transit delay across each NE.

The network link 112 corresponds to the physical link which carries network packets. The end-to-end path 111 corresponds to the end-to-end synchronization path which carries the synchronization messages as SYNC messages, Pdelay_response, Pdelay_Req, etc.

The peer delay mechanism implies bidirectional messages exchanges 120 and 130.

Considering a failed P2P TC, with a failure occurring at the peer delay mechanism, this drives reconfiguration and protection schemes and consequently yields to non-optimal and non-cost effective solutions.

More specifically, there is no defined mechanism for efficiently managing a failed peer delay mechanism within a chain of P2P TCs.

Currently if a failure is internally detected by a transparent clock itself, reactive/proactive operations can be performed.

One solution consists in detecting the failure and replacing a end-to-end synchronization path between the Master and the Slave by another valid path, like a backup end-to-end synchronization path.

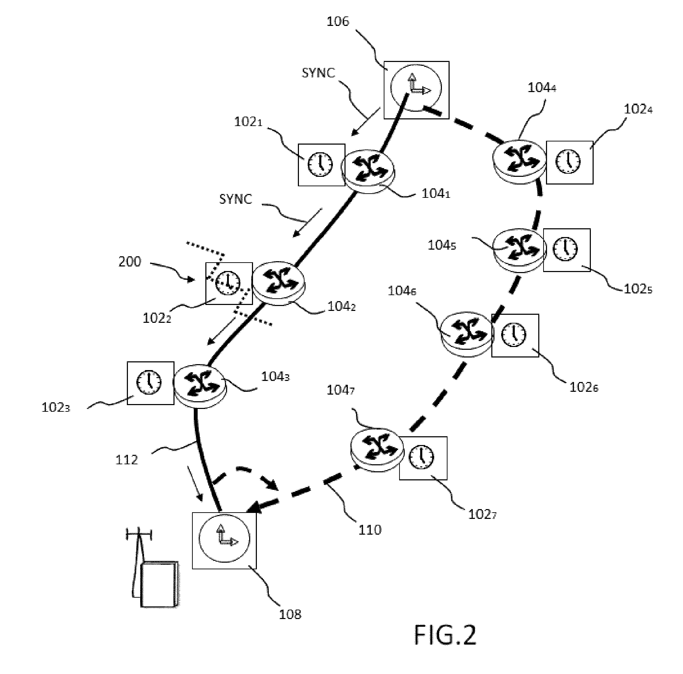

Figure 2 represents such a solution in which a backup end-to-end synchronization path 110 is identified and activated where each individual path delay can be measured.

Some mechanisms exist which allow for informing the related Slaves 108 on the end-to-end synchronization path of a failure event without precisely advertising the specific nature of this failure event.

This advertisement allows a Slave-centric approach - meaning that the reconfiguration of the end-to-end synchronization path is driven by the Slave- for triggering the selection of a backup path 110 avoiding the failed transparent clock. In the figure 2, the backup path comprises a set of NE $104_4$, $104_5$, $104_6$, $104_7$, which are associated respectively to TCs $102_4$, $102_5$, $102_6$, $102_7$

This solution has two mains drawbacks :

- It considers switching the synchronization signal on a backup path: this is not always possible. For instance, when no backup path is available, switching of PTPV2 traffic to the backup path is not allowed as the former is in-band, meaning mixed with users' data traffics.
- This solution does not consider the announcement of a specific partial failure event. It means that it only considers a full failure state announcement.

A second solution consists in deploying an internal redundancy in each NE and associated TC. Internal redundancy can be used meaning that an additional protection scheme can be used locally. When the PTPV2 based path delay measurement failed then this measurement operation can be performed by another internal module.

In essence, this solution puts several implementation constraints and is not cost effective.

Indeed, these approaches require the provisioning of internal transparent clock redundancies and switching procedures - which increase the cost of the transparent clock itself - and/or significant reconfiguration times as the synchronization manager is generally a remote element usually located in a central office at the network core level.

Such significant reconfiguration times imply further Slave requirements (e.g. frequency stability, phase transients filtering) and thus an additional cost thereof.

If a failure is not internally detected by the failed/failing transparent clock itself, a reference clock might be used to control the transparent clock frequency deviation. This reference clock could be embedded either locally - i.e. either within the transparent clock or within an associated network element - or could be available through an external synchronization signal, such as a retimed bit stream. In this case, a locking system might be able to detect any deviation between the frequency carried by the retimed signal and the frequency generated by the local oscillator of the transparent clock.

Disappointingly, these methods also required additional costs, for instance in hardware element such as a Phase Locked Loop.

When holdover mode is implemented in case of failure detection, the holdover mode is triggered at the Slave level, meaning that the progression of time is driven by the stability of the Slave oscillator frequency. This behavior is not relevant for long-term holdover. As an illustration, the time deviation between two high quality/expensive clocks (i.e. Primary References Clocks - ITU-T G.811 characteristics) is already $2\mu s$ per day. Typical Slave clocks are far from these best- in-class clocks.

## Summary

One object of the invention is to overcome at least some of the inconveniences of the state of the art. One embodiment of the invention allows to measure the path delay between two peer adjacent network elements where a failure occurs disabling the peer delay mechanism. The invention improves an operational protection schemes for P2P transparent clock architecture by corrective operations when a failure event occurs disabling the peer delay mechanism between two network elements (NE) of the network.

It is an object of the invention to provide a method for managing an accurate distribution of time in a packet network comprising a plurality of network elements allowing packet transmission, the packet network comprising a peer-to-peer transparent clock, called P2PTC, implemented in at least one network element, called NE. The peer-to-peer transparent clock is at least used in order to measure and correct delays of path adjacent to network elements and NE residence time of time-stamped packets within each traversed network element (NE) of said packet network. The transparent clock hardware support enables a local delay measurement mechanism between two successive elements implementing a peer delay mechanism in the network, a end-to-end synchronization path comprising a first set of network elements and their associated transparent clocks, a Master and a Slave elements implementing one-way signalling through the first set of network elements.

The method comprises :

- detecting a failure event in the local delay measurement mechanism by a first element, the failure event disabling the delay measurement of the upstream path of the said first element ;
- generating a first indicator by the first element when detecting a failure event ;
- receiving the first indicator by a first network entity.

In a preferred embodiment, the method comprises:

- measuring a first end-to-end transmission delay by the Slave corresponding to a transmission delay of the first time stamped packet, called SYNC message, from the Master to the Slave ;
- starting requesting a two-way signalling mode by the first network entity, the request allowing the generation of at least a second time stamped packet, called DELAY_REQ message, in an unidirectional upstream direction from the Slave to the Master into the same end-to-end synchronization path in order to measure a second end-to-end transmission delay corresponding to a transmission delay of the second time stamp packet from the Slave to the Master ;
- computing the path delay of the upstream path of the first element by comparing the first and the second end-to-end transmission delay.

The method of the invention also allows to communicate the previously computed value of the path delay to the failed PTP TC. The method also allows to switch back to the one-way signalling mode after the emission of the previously computed value of the path delay. The emission of the computed path delay may be sent by the first network entity.

Advantageously, the local delay measurement mechanism is the peer delay mechanism of the PTP protocol defined in the IEEE1588V2 protocol.

Advantageously, the first entity is the Slave of the end-to-end synchronization path.

Advantageously, the step of requesting a two-way signalling mode comprises the emission of a synchronization message or a management message from the Slave to the Master in order to activate the two-way signalling mode.

Advantageously, the first entity is a Network Operator Facility NOF comprising a synchronization manager SM and a network manager NM.

Advantageously, the step of requesting a two-way signalling mode comprises the emission of a management message from the synchronization manager to the Slave and to the Master in order to activate the two-way signalling mode between the Slave and the Master.

Advantageously, the step of generating an indicator comprises at least updating the value of a specific field of a first stamped packet by the first element.

Advantageously, the specific field of data of the first time stamp packet is supported by a specific Type Length Value TLV extension field of a SYNC message as defined in the IEEE1588V2 protocol.

Advantageously, the specific field of data of the first time stamp packet is supported by a specific field of the header of a SYNC message as defined in the IEEE1588V2 protocol.

Advantageously, time stamped packets comprise at least a correction field, called CF, indicating the cumulated transmission delay of the said packets along the end-to-end synchronization path, the correction field being updated by each network element of the first set by an increment value, each increment value being a function of the path delay di between two adjacent network elements and the residence time of the traversed network element, the value of the path delay of the increment value being set to zero by the first element when the peer delay mechanism failure occurs.

Advantageously, the first time stamp packet is a SYNC message and the second packet is a DELAY_REQ message as defined in the IEEE1588V2 protocol, each previous message having for the end-to-end synchronization path from the Master to the Slave and respectively from the Slave to the Master, a correction field defined as CF(SYNC) and respectively CF(DELAY_REQ).

Advantageously, the missing path delay is computed by the following equation :

$$d2 = [TD1 + TD2 - CF(SYNC) - CF(DELAY\_REQ)]/2.$$

Where TD1 is the end-to-end transmission delay of a first time stamped packet, called SYNC message, from the Master 106 to the Slave 108, and ;

Where TD2 is the end-to-end transmission delay of a second time stamped packet, called DELAY_REQ message, from the Slave 108 to the Master 106.

The second time stamped packet is transmitted on the same end-to-end synchronization path than the first time stamped packet thanks to the two-way signalling mode.

TD1 and TD2 are explained in more detail in the following description.

It is another object of the invention to provide a Slave for detecting and managing a synchronization failure in a packet network, the failure disabling a local delay measurement mechanism between two adjacent network elements, the two adjacent network elements being part of a set of network elements defining an end-to-end synchronization path between a Master and the said Slave.

The said Slave allows for :

- identifying a first network element impacted by the synchronisation failure, the first network element being not able to measure the path delay with his upstream adjacent network element ;
- measuring a first end-to-end transmission delay (TD1) corresponding to a transmission delay of the first time stamped packet (SYNC) from the Master (106) to the Slave (108),
- starting requesting a two-way signalling mode, the request allowing the generation of at least a second time stamped packet (DELAY_REQ) in an unidirectional upstream direction toward the Master (108) on the same end-to-end synchronization path in order to measure a second end-to-end transmission delay (TD2) corresponding to a transmission delay of the second time stamp packet (DELAY_REQ) from the Slave (108) to the Master (106) ;
- computing the path delay (d2) of the upstream path (120) of the first element ($104_2$, $102_2$) by comparing the first (TD1) and the second (TD2) end-to-end transmission delays.

Advantageously, the Slave allows for the achievement of steps of method.

It is another object of the invention to provide Synchronization Manager SM for detecting/capturing and managing a synchronization failure in a packet network, the synchronization failure corresponding to a peer delay mechanism failure, the failure disabling a local delay measurement mechanism between two adjacent network elements, the two adjacent network elements being part of a set of network elements defining an end-to-end synchronization path between a Master and a Slave, the Slave being able to measure a first end-to-end transmission delay corresponding to a transmission delay of the first time stamped packet from the Master to the Slave.

The said synchronization manager allows for:

- identifying a first network element impacted by the synchronisation failure, the first network element not being able to measure the path delay with his upstream adjacent network element ;
- starting requesting a two-way signalling mode, the request allowing the generation by the Slave of at least a second time stamped packet in an unidirectional upstream direction toward the Master on the same end-to-end synchronization path in order to measure a second end-to-end transmission delay corresponding to a transmission delay of the second time stamp packet from the Slave to the Master;
- computing the path delay of the upstream path of the first element by comparing the first and the second end-to-end transmission delays.

**Brief description of the drawings**

These and other aspects of the invention will be apparent from and elucidated with reference to the embodiments described hereafter with reference being made to the drawings in which:

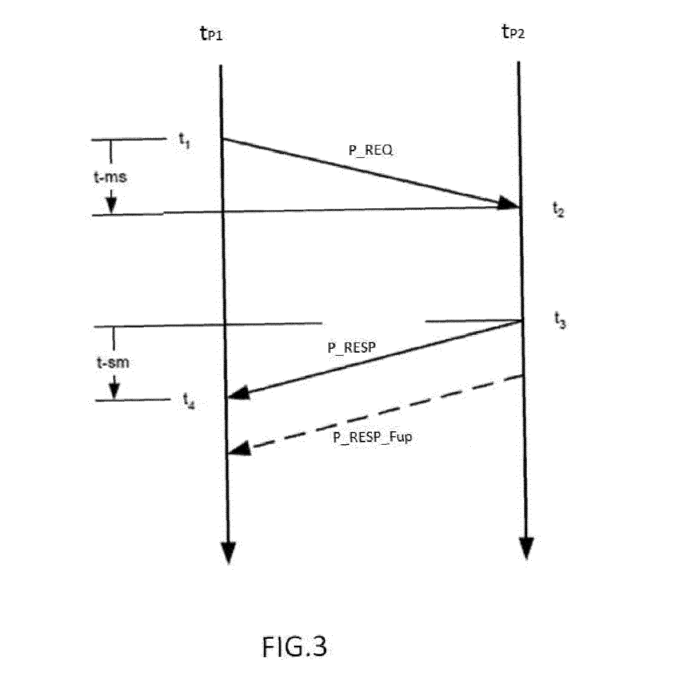

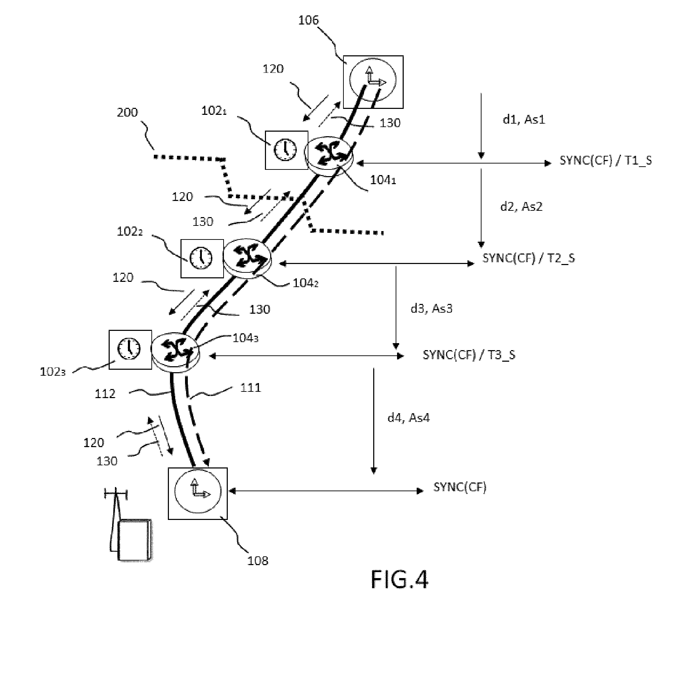

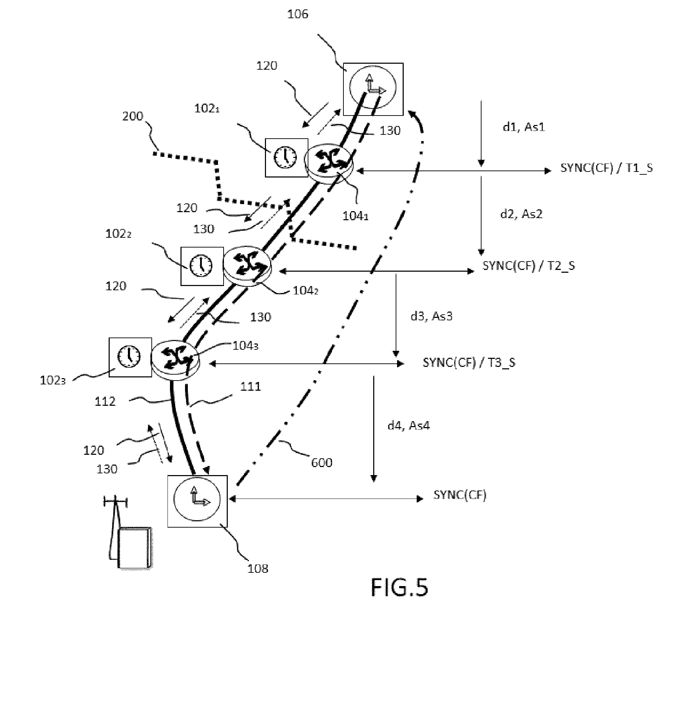

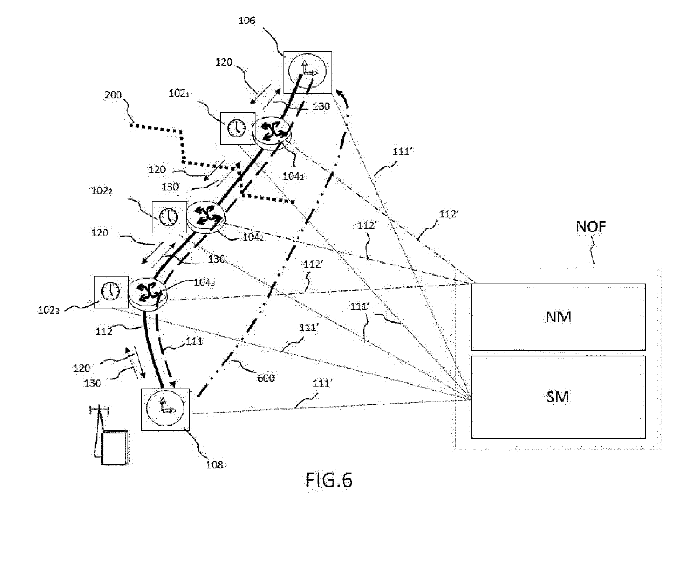

■ figure 1 illustrates an end-to-end synchronization path between a Slave and a Master through different NEs and P2P TCs used in the current solutions;
■ figure 2 illustrates a solution of the state of the art when a failure occurs by reconfiguring a backup end-to-end synchronization path;
■ figure 3 illustrates the peer delay mechanism of a P2P transparent clock architecture ;
■ figure 4 illustrates the packet network of figure 1 wherein a path presents a failure ;
■ figure 5 illustrates a first embodiment of the method of the invention wherein a two-way signalling mode is started by a Slave (Slave-centric approach) along the end-to-end synchronization path allowing the measurement of the missing local path delay ;
■ figure 6 illustrates a second embodiment of the method of the invention wherein a two-way signalling mode is started by a synchronization manage (synchronization manager centric approach) along the end-to-end synchronization path allowing the measurement of the missing local path delay.

**Detailed description**

In the following description, a PSN defines a "Packet Switched Network". The Precise Time Protocol is called "PTP" and refers to the IEEE 1588 v2 standard.
In such related synchronization architecture, some network elements, called NE, along the communication path between a pair of Master clock and a Slave clock, implement each a TC
In a full P2P deployment each NE is associated to a TC. A NE may be for instance a router or a switch. In a partial deployment only some of the network elements are associated to a P2P TC.
The invention concerns both architectures : full en partial TC deployments.
In the following description, the downstream direction means the Master-to-Slave direction and the upstream direction means the Slave-to-Master direction.
In the following description, "Slave" terminology is either applied both to refer to a slave element, a slave port or a slave clock. In the same manner, the "Master" terminology can be applied both to refer to a master element, a master port or a master clock.
Figure 3 represents the peer delay mechanism of a P2P transparent clock architecture. This mechanism allows for measuring the path delay between two ports that implement the peer delay mechanism. Such as P2PTC, Master and a Slave ports. This measurement is conducted by both ports implementing the peer delay mechanism. Both ports - sharing a path- independently trigger the delay measurement and thus both ports know the path delay, also called the mean path delay, the mean path delay between two ports being the average delay between the upstream path delay and the downstream path delay between the two ports. It is important to underline that the delay measurement mechanism is an independent process from the synchronisation mechanism.
The path delay measurement starts with port-1 issuing a P_REQ message, also known as "Pdelay_Req message" and generating a timestamp t1 for the P_REQ message. $t_{P1}$ represents the time scale in port 1 of a first transparent clock TC1. P_REQ messages are represented by arrows 130 on figure 1, 4, 5 and 6.
Port-2 receives the P_REQ message and generates a timestamp t2 for this message. Port-2 returns a P_RESP, also known as "Pdelay_Resp message", and generates a timestamp t3 for this message. $t_{P2}$ represents the time scale in port 2 of a second transparent clock TC2. P_REQ messages are represented by arrows 120 on figure 1, 4, 5 and 6.
In order to minimize errors due to any frequency offset between the two ports, Port-2 returns the P_RESP message as quickly as possible after the receipt of the P_REQ message.
Following the IEEE PTPV2 standard Port-2 either:

- returns the difference between the timestamps t2 and t3 in the P_RESP message ;
- returns the difference between the timestamps t2 and t3 in a P_RESP_Fup, also known as "Pdelay_Resp_Follow_Up message" ;
- returns the timestamps t2 and t3 in the P_RESP and P_RESP_Fup messages, Respectively Port-1 generates a timestamp t4 upon receiving the P_RESP message. Port-1 then uses these four timestamps to compute the mean path delay.

As defined in the IEEE 1588V2, the peer delay mechanism mainly consists of the exchange of P_REQ / P_RESP messages in order to measure the mean path delay while considering opposite communication directions.

The method of the invention is related to a one-step mode, i.e. without implementing the P_RESP_Fup message, or to a two-step-mode, i.e. implementing P_RESP_Fup message.

The peer delay mechanism is implemented in a two-way mode in local path between two adjacent NE. In the example of figure 3, P_REQ message is transmitted in one direction and P_RESP message is transmitted in another direction in the local path between two adjacent NE ports.

When a failure occurs on a path between two adjacent P2P TC, the downstream P2P TC cannot measure the path delay because the peer delay mechanism is disabled.

Figure 4 represents the end-to-end synchronization path 112 of figure 1 in which a failure 200 occurs at the P2P mechanism level. The P2P messages 120 and/or 130 are not received or emitted correctly. When a failure occurs at this level, the messages 120 and/or 130 do not ensure proper operations of a local delay measurement mechanism in the path joining node $104_1$ and node $104_2$.

In that case, the node $104_2$ and its associated P2P TC $102_2$ are impacted by the failure event 200.

The method of the invention allows to retrieve the missing path delay of messages 120 transmitted from the node $104_1$ and node $104_2$ and correct accordingly the Synchronization messages.

When a failure occurs in the peer delay mechanism between two P2P TCs, a degraded context appears in the network. It means that all impacted Slaves by the failure change their own mode into a holdover mode which implies a local management of time and synchronization considerations by a local clock.

Figure 5 represents a first embodiment of the invention in regards with the same reference as figure 1. The first embodiment represents a Slave-centric approach of the invention.

Figure 6 represents a second embodiment of the invention which offers a synchronization-manager-centric approach of the invention.

The first and the second embodiments may be combined in a variant approach.

In reference to figure 5, a packet network comprises PTP transparent clocks $102_1$, $102_2$, $102_3$ in order to determine and correct the transmission delay of data packets through elements $104_1$, $104_2$, $104_3$ of said network.

More precisely each network element 104i is associated to a transparent clock $102_i$ whose function mainly consists in measuring the network element cumulated residence times of time-stamped packets transmitted between a Master 106 and a Slave 108 through at least one end-to-end path 112.

In the first and the second embodiments, said control packets and pair of Master 106/ Slave 108 operate accordingly to the IEEE 1588V2 protocol already mentioned.

Transparent clocks $102_1$, $102_2$, $102_3$ operations, according to said protocol IEEE 1588V2, are dedicated to fight out the packet jitter - i.e. the Packet Delay Variations (PDVs) - within the network as well as the PDV-induced communication path delay asymmetry, often mentioned as "network noise", whereby the communication delay of one PTPV2 message in one direction (e.g. from Master 106 to Slave 108) significantly differs from the delay of a related PTPV2 message (i.e. with the same sequence number) in the opposite direction (e.g. from Slave 108 to Master 106), which is inherent to PSNs ("two-ways" approach).

Moreover targeting an accurate distribution of time lower than $1\mu s$ accuracy, path delay asymmetries are assumed to be known.

It is also noted that the variation of such path delay asymmetry is generally slow along time so that this variation does not impact significantly the time accuracy. This is typically the case for optical links: delays mainly depend on the optical wavelength and on the transmission length. By the way synchronization signals for both communication directions generally experience the same environmental conditions as for instance the temperature variations.

Thus, in normal operational conditions of the peer delay mechanism, individual unidirectional path delays are assumed to be known in both communications directions.

According to a first aspect of the invention dealing with a first step, the method allows failure detection by a network element. Depending of the localization of the failure, at least one network element is able to detect the failure event.

Different methods allow failure detections. According to figure 3 when a message expected as described above, i.e. P_REQ, P_RESP or P_RESP_Fup, is not received by a network element, an alarm can be raised in order to validate a failure event.

In figure 5, a failure event 200 occurs on the path between NE $104_1$ and NE $104_2$. The failure event disables the peer delay mechanism between NE $104_2$ and NE $104_1$. The P2P TC $102_2$ is able to detect the failure event.

When a failure 200 occurs between P2P TC $102_1$ and $102_2$, the method of the invention allow the $102_2$ P2P TC to generate a first indicator in at least a specific field of a first time stamped packet.

The indicator can be generated in a header of SYNC message or in a TLV of a SYNC message.

The P2P TC in a failure mode generates a specific error indicator within the SYNC message in order to inform the Slave or the network manager and/or the synchronization manager of the peer delay mechanism failure.

When the indicator is sent to the Slave it corresponds to the first embodiment represented in figure 5.

When the indicator is sent to a Network Operator Facility, called NOF on figure 6 comprising a Network manager, called NM, or a synchronization manager, called SM, it corresponds to the second embodiment represented in figure 6.

This indicator may be supported by :

- a new TLV (Type Length Value) extension within SYNC messages or ;
- in the header of a SYNC message, for instance an unoccupied/ undeveloped field of the header such as the Control Field;
- a dedicated message can also be generated in order to carry the indicator. For instance the indicator can be supported by a specific management message when the second embodiment of the invention is used.

In others embodiments, the failure indicator may be supported by dedicated Announce or Follow-up messages. Although, P2P TC are transparent to the P2P control message, they may be implemented in each NE.

A one-bit ID field can be used with ID=1 for indicating a working peer delay mechanism or ID=0 for a failed one. Another field may be assigned for announcing the failed peer delay port.

The indicator when indicating a failure event cannot be modified by others NE or other P2P TC of the end-to-end synchronization path. It ensures a good transmission to the slave or to the synchronization manager of the localization of failure event.

This indicator has at least two roles.

A first role comprises indicating a failure event for the peer delay mechanism. This is a "failure indicator" which is an alarm dedicated to inform either the impacted slave(s) or the synchronization manager with the following goals:

- to start changing signaling from a one way mode to a Two-ways mode in order to compute the missing path delay ;
- to localize the peer delay port responsible for the failure.

Following this alarm signal, the failed P2P TC $102_2$ keeps on cumulating known values such as the path delay asymmetry As2 and the residence time of the SYNC message through the network node $102_2/104_2$. But the unknown value d2 is not taken into account in the Correction Field as it is described below.

When such a failure event is detecting by a pair P2P TC, the method of the invention allows a local updating of the correction field of the SYNC message with a value set to zero of the path delay of the failed path.

Accordingly to the failure alarm indicator raised by the failed P2P TC, the slave detects that d2 is missing. This latter can enter into the holdover mode. In any case, it triggers a two-way signalling mode jointly with the Master as a measurement step for reaching d2.

This sequence implies that the Master is able to switch "on demand" between one-way and two-way mode. The method of the invention allows defining a specific behaviour of the Master in order to accept the two-way mode request.

This behaviour can be triggered by using different ways, for instance :

- the network manager may control the mode of the Master with a predefined management plan ;
- The DELAY_REQ message may be used for transmitting a specific command toward the Master which may be able to take into account such a command for applying a mode switching procedure ;

    ○ in that case, the Master may detect that a one-way / two-way switching is required while receiving a DELAY_REQ message ;

    ○ for this procedure, a specific TLV extension could be used for switching back from a two-way mode to a one-way mode when the missing path delay is communicated to the impacted P2P TC.
    This latter TLV could be a time-out or a direct command setting up the required mode, a one bit field for instance.

- by using the Unicast negotiation mechanism depicted in the section 16.1 of the IEEE1588V2 standard. As an illustration, The REQUEST_UNICAST_TRANSMISSION TLV could be extended for supporting the negotiation for the switching between one-way and two-way modes.

In this first embodiment, the Slave 108 is able to receive and detect the failure event on the end-to-end synchronization path by analysing the first indicator of the received message.

The methods described in the patent application EP2367309 can also be used in order to detect a failure event.

The slave measures a first delay corresponding to a end-to-end transmission delay, called TD1, of the first time stamped packet from the Master to the Slave.

In the first embodiment, the Slave starts requesting a two-way signalling mode. The method of the invention allows an automatic one-way/two-ways mode switching mechanism.

This switching procedure, combined with an adaptation of the values cumulated within the correction field, allows for retrieving the missing path delay as it is described below.

The method allows the slave to generate at least a second time stamped packet, called DELAY_REQ also called Delay_Request, from the Slave 108 to the Master 106 on the same end-to-end synchronization path in order to measure a second delay TD2 corresponding to an end-to-end transmission delay of the second time stamp packet from the Slave 108 to the Master 106. This end-to-end path is represented in figure 5 by the end-to-end path 600.

In the second embodiment, a Synchronization Manager, called SM, associated to a network manager, called NM, may be used for triggering a switching procedure from a one-way mode to a two-way mode.

In that embodiment, the SM may be advertised either :

- by a Slave or ;
- by the failed P2P TC of a failure at the P2P mechanism level.

Then the SM is able to trigger the two-way mode by sending adequate management messages to the Master and the different Slaves impacted by the failure event.

In figure 6 network management messages are sent and received by the network manager through different network paths 112'. On the other hand, synchronization management messages are exchanged through different synchronization management paths 111'.

The path 600 is also represented in figure 6, because when the network manager NM and its associated synchronization manager SM detect a failure event, an initialization of a two-way mode is requested. The two-way mode comprises the establishment of an end-to-end path 600, ordered by the SM/NM to the Slave 108 and the Master 106.

In the following paragraphs, different parameters are defined in order to better understand the ways to measure the missing path delay.

- $Di$ is the unidirectional downstream delay of the path i ;
- $Ui$ is the unidirectional upstream delay of the path i ;
- $di$ represents the mean delay of the individual path i taking into account both communication directions ;
  At a given time: $di = [Di + Ui] / 2$
- $Asi$ is the delay asymmetry of the path i, $Asi$ is defined similarly to the PTPV2 standard (section 7.4.2) as:

  ○ $Di = di + Asi$
  ○ $Ui = di - Asi$

Thus $Asi = [Di - Ui] / 2$

- $Ti\_S$ represents the transmission delay of SYNC messages through the node i at a given time t, it means the residence time through node i of SYNC messages ;
- $Ti\_R$ represents the transmission delay of DELAY_REQ messages through the node i at a given time t, it means the residence time through node i of DELAY_REQ messages.

In figure 4, mean delay of each individual path d1, d2, d3 and d4 and their associated delay asymmetry As1, As2, As3 and As4 are represented. The SYNC message are noted SYNC(CF) in each node where the SYNC message is routed. Each residence time T1_S, T2_S, T3_S are also represented in the figure 4.

Out of a failure event, in each node, the associated P2P TC updates the correction field of the SYNC message with the current value of each associated residence time $Ti\_S$ and path delay $di$.

Otherwise, CF(SYNC(t)) is the known Correction Field associated to the SYNC message received by the Slave. CF(SYNC) can be written as delay(SYNC(t)). Considering the end-to-end transmission delay of time stamped packets from the Master 106 to the Slave 108 :

- T1 the emission timestamp at the Master for the observed SYNC message ;
- T2 is the reception timestamp at the Slave for the observed SYNC message.
  Let introduce TD1 = T2 - T1;
- 'Offset' being the time offset between the Master and the Slave clocks which is time dependent.

In reference to figure 4, when a failure occurs at the peer delay mechanism related to the network node $104_2$

and the P2P TC $102_2$, it prevents PTPV2 from measuring the d2 value which may vary significantly with time after the failure. However the actual value of d2 is necessary for maintaining a one-way and multicast mode for time synchronization.

Just before the failure event, the time is referred as t=t0-.

CF(SYNC (t0-)) is the correction field of the SYNC messages received by the Slave prior to the failure event. It takes into account all di and Ti_S of the end-to-end synchronization path.

Thus the value "Offset" is known.

TD1 is the end-to-end transmission delay of the first time stamped packet, called SYNC message, from the Master 106 to the Slave 108.

The following relation can be applied :

$$TD1(t0\text{-}) = T2(t0\text{-}) - T1(t0\text{-}) = Offset(t0\text{-}) + delay(SYNC(t0\text{-})) ;$$

$$CF(SYNC(t0\text{-})) = (d1\text{-}As1) + (d2\text{-}As2) + (d3\text{-}As3) + (d4\text{-}As4) + T1\_S + T2\_S + T3\_S + T4\_S$$

with [di; Asi] taken à t= t0-.

We have before the failure event :

$$CF(SYNC(t0\text{-})) = delay(SYNC(t0\text{-}))$$

Thus :

$$(1)\ T2(t0\text{-}) - T1(t0\text{-}) = Offset(t0\text{-}) + CF(SYNC(t0\text{-}))$$

Just after the failure event (t=t0+), the time is referred as t=t0+. The following relations can be applied :

$$T2(t0+) - T1(t0+) = Offset(t0+) + delay(SYNC(t0+)) ;$$

$$CF(SYNC(t0+)) = delay(SYNC(t0+)) - d2(t0+) ;$$

Thus:

$$(2)\ T2(t0+) - T1(t0+) = Offset(t0+) + CF(SYNC(t0+)) + d2\ (t0+) ;$$

CF(SYNC(t0+)) is the correction field of the SYNC messages received by the Slave after the failure event. It takes into account all "di" and "Ti_S" of the end-to-end synchronization path from the Master to the Slave excepted d2 path delay.

Just after the failure, (t=t0+) d2 is not cumulated within the Correction_Field of the SYNC message CF(SYNC).

When a failure is detected by the P2P TC $102_2$ the correction field is not updated at the P2P TC level. d2 is missing and the increment value of the correction field is set to zero by the node $102_2$/ $104_2$ because the failure event 200 disables the peer delay mechanism, by this effect d2 is unknown at this time by the said node.

Assuming Offset is constant between t0- and t0+ : Offset(t0+) = Offset(t0-), then the method of the invention allows to estimate the d2 value for a certain time where d2 becomes unknown as not measured again and as its variation may be significant with regards to the targeted time accuracy.

# Combining (1) and (2) and assuming Offset(t0-) = Offset(t0+)

$$\text{(1)} \quad T2(t0-) - T1(t0-) = \text{Offset}(t0-) + CF(SYNC(t0-))$$

$$\text{(2)} \quad T2(t0+) - T1(t0+) = \text{Offset}(t0+) + CF(SYNC(t0+)) + d2(t0+)$$

The method of the invention allows to compute d2(T0+) :

$$d2(t0+) = [T2(t0+)-T1(t0+) - CF(SYNC(t0+))] - [T2(t0-) - T1(t0-) - CF(SYNC(t0-))]$$

d2 is computable at t=t0+ just after the failure considering that the time offset is constant between t0- and t0+.

At t=t1 for which the offset stability assumption is not valid, the two way mode is established, it means that the Master has accepted the two-ways mode request, both following messages are active :

- SYNC messages transmitted in the downstream direction from the Master to the Slave of the end-to-end synchronization path ;
- DELAY_REQ messages transmitted in the upstream direction from the Slave to the Master of the end-to-end synchronization path.

One DELAY_REQ specific message is associated to a specific SYNC message. When a SYNC message is associated to t1-, a DELAY_REQ message is associated to t1+, few milliseconds just after the reception of the SYNC message by the Slave.

As it is explain before, at t1 : d2 is missing and then not cumulated within the correction field of the SYNC message and DELAY_REQ message.

Accordingly :

$$\text{(1) } CF(SYNC(t1-)) = \text{delay}(SYNC(t1-)) - d2$$

$$\text{(2) } CF(DELAY\_REQ(t1+)) = \text{delay}(DELAY\_REQ(t1+)) - d2$$

TD2 is the end-to-end transmission delay of the of the second time stamp packet, called DELAY_REQ message, from the Slave 108 to the Master 106.

- T3 the emission timestamp at the Slave for the observed DELAY_REQ message ;
- T4 is the reception timestamp at the Master for the observed DELAY_REQ message.

T4 is received by the Slave with the Pdelay_Resp message which is sent from the Master to the Slave.

And keeping the same notation of T1 and T2 at t = t1, the PTPV2 equations can be written as follow :

$$\text{(3) } T2 - T1 = \text{Offset} + \text{delay}(SYNC(t1-))$$

$$\text{(4) } T4 - T3 = -\text{Offset} + \text{delay}(DELAY\_REQ(t1+))$$

Thus taking (1); (3) and (2);(4) we obtain:

$$(5) \; T2 - T1 = \; Offset + CF(SYNC) + d2$$

$$(6) \; T4 - T3 = \; - \, Offset + CF(DELAY\_REQ) + d2$$

Finally, we obtain the following relationship allowing the calculation of d2 :

$$d2(t=t1) = [(T2 - T1) + (T4 - T3) - CF(SYNC) - CF(DELAY\_REQ)] \, / \, 2$$

When the two ways signalling mode is triggered then regarding the exchange of end-to-end SYNC and DELAY_REQ messages, the Slave is able to measure the d2 value.

However, during the recovering process, the synchronization path allowing a two-ways mode, d2 is declared as missing, it means that the P2P TC set the increment value to zero of the correction field. During the recovering phase, the slave remains in a holdover mode.

The method comprises a step of measuring the value of the missing value of d2 when a failure occurs and comprises a step for communicating the computed value of d2 to the P2P TC $102_2$ associated to the node $104_2$.

In the first embodiment, the Slave transmits the computed value of d2 to the failed P2P TC through a DELAY_REQ signalling message.

In the second embodiment shown in figure 5, the synchronization manager transmits directly the computed value of d2 to the failed P2P TC.

In different ways to implement the solution of the invention, the computed value of d2 can be transmitted into different ways.

- a specific TLV may be assigned for this purpose ;
- alternatively, the Correction_Field of the DELAY_REQ message may be used regarding the use of a non-writable field by traversed TCs ;
- finally, the Slave may also communicate the d2 value to a management plane able to forward it to the failed TC, as it is shown in figure 5 within the second embodiment.

The method of the invention allows for recovering a one-way mode after the transmission of d2 and the reception of d2 by the failed P2P TC. It particularly allows for saving the bandwidth in the network architecture.

After achieving the recovering procedure, the Slave exits the holdover mode and comes back to the locked mode,

Advantageously, the method of the invention allowing this measurement procedure related to one-way to two-way switching and switching back may be triggered instantaneously or after a certain time relatively to the stability of the related path delay along time.

The method of the invention can be regularly repeated until the peer delay failure is fixed.

In an operational condition, a one-way signalling mode suggests the use of Multicast transmission of the SYNC message. When a failure occurs at the P2P mechanism level, there are potentially multiple Slaves impacted by the failed P2P TC.

The method of the invention allows the management of the definition of only one Slave for applying the measurement procedure of d2 although all impacted Slaves remain in a holdover state during this recovery step. The "measuring" Slave could be designated by the network operator for instance.

The method of the invention aims at offering an optimal protection schemes for P2P TCs while recovering a failure at the peer delay mechanism level.

Advantageously, the measurement of d2 and the corrective operation by the P2P TC offers by the coordinated one-way/ two ways mode switching, allowing for saving synchronization resources, management and maintenance operations

Advantageously, the method of the invention allows for avoiding some techniques such as establishing backup path, building internal redundancy, implementing long holdover mode, each presenting some drawbacks in terms of resource provisioning, resource allocation and stability of the synchronization topology.

The method of the invention allows for better resource provisioning, resource allocation and a better stability of the synchronization topology than solutions from the state-of-the-art.

The different aspects of the invention particularly cover the mobile network application demonstrating stringent frequency and time requirements (microsecond accuracy) at the slave level. A full Transparent Clock deployment is one viable approach for addressing such an issue.

As mentioned, this proposal assumes a TC implemented on every NE within the PSN but, depending on the embodiments, this "full deployment" implementation might not be required.

## Claims

1. Method for managing an accurate distribution of time in a packet network comprising a plurality of network elements allowing packet transmission, the packet network comprising a peer-to-peer transparent clock (P2PTC) implemented in at least one network element (NE), the peer-to-peer transparent clock (P2P TC) allowing for a local delay measurement mechanism in order to measure and correct delays of_path adjacent to network elements and NE residence time of time-stamped packets within each traversed network element (NE) of said packet network, a Master (106) /Slave (108) end-to-end synchronization path (112) comprising a first set of network elements ($104_1$, $104_2$, $104_3$) and their associated transparent clocks ($102_1$, $102_2$, $102_3$), the Master (106) and Slave (108) implementing a one-way signalling mode through the first set of network elements, wherein the method comprises :

   • detecting a failure event in the local delay measurement mechanism by a first element ($104_2$, $102_2$), the failure event disabling the delay measurement of the upstream path of the said first element ;
   • generating a first indicator by the first element when detecting a failure event ;
   • receiving the first indicator by a first network entity (108, SM).

2. Method according to claim 1, wherein the method comprises :

   • starting requesting a two-way signalling mode by the first entity (108, SM), the request allowing the generation of at least a second time stamped packet (DELAY_REQ) in an unidirectional upstream direction from the Slave (106) to the Master (108) on the same end-to-end synchronization path in order to measure a second end-to-end transmission delay (TD2) corresponding to a transmission delay of the second time stamp packet (DELAY_REQ) from the Slave (108) to the Master (106) ;
   • measuring a first end-to-end transmission delay (TD1) by the Slave corresponding to a transmission delay of the first time stamped packet (SYNC) from the Master (106) to the Slave (108) ;
   • computing the local path delay (d2) of the upstream path (120) of the first element (1042, 1022) by comparing the first (TD1) and the second (TD2) end-to-end transmission delays.

3. Method according to claim 2, wherein the method comprises :

   • communicating the previously computed value of the local path delay (d2) to the failed P2P TC.
   • switching back to the one-way signalling mode after the emission of the previously computed value of the local path delay (d2).

4. Method according to any claim from 1 to 3, wherein the local delay measurement mechanism is the peer delay mechanism of the PTP protocol defined in the IEEE1588V2 protocol.

5. Method according to any claim from 2 to 4, wherein the first entity is the Slave (108) of the end-to-end synchronization path (112), the step of requesting a two-way signalling mode comprising the emission of a synchronization message from the Slave (108) to the Master (106) in order to activate the two-way signalling mode.

6. Method according to any claim from 2 to 4, wherein the first entity is the Slave (108) of the end-to-end synchronization path (112), the step of requesting a two-way signalling mode comprising the emission of a management message from the Slave (108) to the Master (106) in order to activate the two-way signalling mode.

7. Method according to any claim from 2 to 4, wherein the first entity is a Network Operator Facility (NOF) comprising a synchronization manager (SM) and a network manager (NM), the step of requesting a two-way signalling mode comprising the emission of a management message from the synchronization manager (SM) to the Slave (108) and to the Master (106) in order to activate the two-way signalling mode between the Slave (106) and the Master (106).

8. Method according to any claim from 1 or 7, wherein the step of generating an indicator comprises at least updating the value of a specific field of a first stamped packet by the first element ($104_2$, $102_2$).

9. Method according to claim 8, wherein the specific field of data of the first time stamp packet is supported by a specific TLV extension field of a SYNC message as defined in the IEEE1588V2 protocol.

10. Method according to claim 8, wherein the specific field of data of the first time stamp packet is supported by a specific field of the header of a SYNC message as defined in the IEEE1588V2 protocol.

11. Method according to any claim from 1 or 10, wherein time stamped packets comprise at least a correction field (CF) indicating the cumulated transmission delay of the said packets along the end-to-end synchronization path (112), the correction field (CF) being updated by each network element ($104_i$, $102_i$) of the first set by an increment value, each increment value being a function of the path delay (di) between two adjacent network elements and the residence time of the traversed network element, the value of the path delay of the increment value being set to zero by the first element when a failure occurs.

12. Method to any claim from 1 to 11, wherein the first time stamp packet is a SYNC message and the second packet is a DELAY_REQ message as defined in the IEEE1588V2 protocol, each previous message having for the end-to-end synchronization path (112) from the Master (106) to the Slave (108) and respectively from the Slave (108) to the Master (106), a correction field defined as CF(SYNC) and respectively CF(DELAY_REQ).

13. Method according to claim 12, wherein the missing path delay (d2) is computed by the following equation :

$$d2 = [TD1 + TD2 - CF(SYNC) - CF(DELAY\_REQ)]/2.$$

14. Slave (108) for detecting and managing a synchronization failure (200) in a packet network, the failure disabling a local delay measurement mechanism between two adjacent network elements ($102_1/104_1$, $102_2/104_2$), the two adjacent network elements being part of a set of network elements defining a end-to-end synchronization path between a Master and the said Slave, wherein the Slave is capable of :

• identifying a first network element impacted by the synchronisation failure, the first network element being not able to measure the path delay with his upstream adjacent network element ;
• starting requesting a two-way signalling mode, the request allowing the generation of at least a second time stamped packet (DELAY_REQ) in an unidirectional upstream direction toward the Master (108) on the same end-to-end synchronization path in order to measure a second end-to-end transmission delay (TD2) corresponding to a transmission delay of the second time stamp packet (DELAY_REQ) from the Slave (108) to the Master (106) ;
• measuring a first end-to-end transmission delay (TD1) corresponding to a transmission delay of the first time stamped packet (SYNC) from the Master (106) to the Slave (108),
• computing the path delay (d2) of the upstream path (120) of the first element ($104_2$, $102_2$) by comparing the first (TD1) and the second (TD2) end-to-end transmission delays.

15. Slave according to claim 14, wherein it allows the achievement of steps of method according claim 1 to claim 12.

16. Synchronization manager (SM) for detecting and managing a synchronization failure (200) in a packet network, the failure disabling a local delay measurement mechanism between two adjacent network elements ($102_1/104_1$, $102_2/104_2$), the two adjacent network elements being part of a set of network elements defining an end-to-end synchronization path between a Master and a Slave, the Slave being able to measure a first end-to-end transmission delay (TD1) corresponding to a transmission delay of the first time stamped packet (SYNC) from the Master (106) to the Slave (108), wherein the synchronization manager is capable of :

• identifying a first network element impacted by the synchronisation failure, the first network element being not able to measure the path delay with his upstream adjacent network element ;
• starting requesting a two-way signalling mode, the request allowing the generation by the Slave of at least a second time stamped packet (DELAY_REQ) in an unidirectional upstream direction toward the Master (108) into the same end-to-end synchronization path in order to measure a second end-to-end transmission delay (TD2) corresponding to a transmission delay of the second time stamp packet (DELAY_REQ) from the Slave (108) to the Master (106);
• computing the path delay (d2) of the upstream path (120) of the first element ($104_2$, $102_2$) by comparing the

first (TD1) and the second (TD2) end-to-end transmission delays.

FIG.1

FIG.2

FIG.3

FIG.4

FIG.5

FIG.6

EP 2 712 100 A1

**Europäisches Patentamt**
**European Patent Office**
**Office européen des brevets**

# EUROPEAN SEARCH REPORT

Application Number

EP 12 18 5082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | EP 2 367 309 A1 (ALCATEL LUCENT [FR])<br>21 September 2011 (2011-09-21)<br>* column 1, paragraph 1 - column 2, paragraph 18 *<br>* column 4, paragraph 29 - column 7, paragraph 59 *<br>* figures 1-3 *<br>----- | 1,4,<br>8-10,12<br>2,16 | INV.<br>H04J3/06 |
| Y | DINH THAI BUI ET AL: "Dual and hybrid PTP modules",<br>PRECISION CLOCK SYNCHRONIZATION FOR MEASUREMENT CONTROL AND COMMUNICATION (ISPCS), 2011 INTERNATIONAL IEEE SYMPOSIUM ON, IEEE,<br>12 September 2011 (2011-09-12), pages 31-37, XP031974492,<br>DOI: 10.1109/ISPCS.2011.6070141<br>ISBN: 978-1-61284-893-8<br>* the whole document *<br>----- | 2,16 | |
| A | "IEEE Standard for a Precision Clock Synchronization Protocol for Networked Measurement and Control Systems;IEEE Std 1588-2008 (Revision of IEEE Std 1588-2002) ED - Anonymous",<br>IEEE STANDARD; [IEEE STANDARD], IEEE, PISCATAWAY, NJ, USA,<br>24 July 2008 (2008-07-24), pages c1-269, XP017604130,<br>ISBN: 978-0-7381-5400-8<br>* 10. PTP for transparent clocks<br>11. Clock offset, path delay, residence time, and asymmetry corrections<br>Annex C<br>Annex J *<br>-----<br>-/-- | 1-16 | TECHNICAL FIELDS SEARCHED (IPC)<br><br>H04J |

The present search report has been drawn up for all claims

| Place of search | Date of completion of the search | Examiner |
|---|---|---|
| Munich | 23 November 2012 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

Europäisches
Patentamt

European
Patent Office

Office européen
des brevets

**EUROPEAN SEARCH REPORT**

Application Number

EP 12 18 5082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SVEN MEIER ET AL: "IEEE 1588 applied in the environment of high availability LANs", INFORMATION SCIENCES AND SYSTEMS, 2007. CISS '07. 41ST ANNUAL CON FERENCE ON, IEEE, PI, 1 October 2007 (2007-10-01), pages 100-104, XP031161286, ISBN: 978-1-4244-1063-7 * the whole document * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 23 November 2012 | Carballo da Costa, E |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 12 18 5082

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2012

| Patent document cited in search report | | Publication date | Patent family member(s) | | Publication date |
|---|---|---|---|---|---|
| EP 2367309 | A1 | 21-09-2011 | CN | 102754370 A | 24-10-2012 |
| | | | EP | 2367309 A1 | 21-09-2011 |
| | | | WO | 2011098466 A1 | 18-08-2011 |

**EP 2 712 100 A1**

## REFERENCES CITED IN THE DESCRIPTION

**Patent documents cited in the description**

- EP 2367309 A